# EUROPEAN PATENT SPECIFICATION

(11) **EP 4 446 241 B1**
(45) Date of publication and mention of the grant of the patent: **14.10.2026**
(21) Application number: 24161283.7
(22) Date of filing: 04.03.2024
(51) Int. Cl.: B64G 1/50, F25B 19/00, F25D 17/00, B64G 1/16, B64G 1/46

(54) **THERMAL CONTROL SYSTEMS FOR REDUCING ICE FORMATION**
WÄRMEREGELUNGSSYSTEM ZUR REDUZIERUNG VON EISBILDUNG
SYSTÈMES DE RÉGULATION THERMIQUE POUR RÉDUIRE LA FORMATION DE GLACE

(30) Priority: 14.04.2023 US 202318301066
(43) Date of publication of application: 16.10.2024
(73) Proprietor: The Boeing Company, Arlington, VA 22202 (US)
(72) Inventor: Adam, Steven J., Arlington, 22202 (US); Bangert Voltz, Erin, Arlington, 22202 (US)
(74) Representative: Witte, Weller & Partner Patentanwälte mbB

(56) References cited:
- WO-A1-2019/112656
- US-A- 6 148 634
- US-A1- 2013 037 234
- US-B1- 9 109 843

## Description

### FIELD

The field of invention relates generally to thermal control systems and, more specifically, thermal control systems utilizing heat transfer fluids.

### BACKGROUND

Thermal control systems are used in many different settings for regulating the temperatures of one or more components within a system. Temperature regulation of components that are sensitive to thermal conditions enables operation at an efficient level. If subjected to temperatures that are too high or too low, the performance of such components can suffer. Many different temperature regulation processes exist. The choice of which to implement can depend on the application. For example, protection from temperature changes in either direction (or both) and the source(s) of such variations, including internal and external sources, can affect the type of thermal control system implemented.

Thermal control systems can be implemented as passive systems, active systems, or a combination of both. Passive thermal control systems can be implemented to maintain temperatures without power input. Structural and electrical designs of the thermal system can contribute to the passive thermal management of the temperature-sensitive components. Such systems are well-suited for applications with lower power, weight, and volume conditions. Examples of passive thermal control systems include the use of insulation materials, coatings, heat sinks, heat pipes, louvers, etc. In more extreme environments where temperature control is more difficult, passive thermal management systems may be unsuitable for implementation. In such cases, active thermal control systems become the more viable option for temperature regulation. Active thermal control systems include apparatuses and processes that use power input for temperature regulation. Examples of active thermal control systems include thermal fluid loops, resistance heaters, and Peltier coolers.

Document US 2013/0037234 A1, according to its abstract, states an aircraft may include an interior and a deployable liquid cooler. The deployable liquid cooler may include a deployable heat exchanger that may be fluidly coupled to at least one heat source of the aircraft. The deployable liquid cooler may receive a cooling system fluid from the heat source for circulation through the deployable heat exchanger. The deployable heat exchanger may be movable between a stowed position in the aircraft interior and a deployed position outside the aircraft. The deployable heat exchanger may transfer heat of the cooling system fluid to an environment outside of the aircraft when the deployable heat exchanger is in the deployed position.

Document US 6 148 634 A, according to its abstract, states a multistage refrigeration System is disclosed, and particularly a System with a thermal storage reservoir disposed in a secondary refrigeration loop of the System. The reservoir stores thermal reservoir material in heat exchange relation with the refrigerant in that secondary refrigeration loop. A primary refrigeration loop transfers heat from the secondary refrigeration loop to ambient. A third refrigeration loop absorbs heat from a product to be cooled and transfers that heat to the secondary refrigeration loop. The thermal reservoir material may undergo a liquid/solid phase change, and preferably has a freezing point at about 20° F. (-7° C). The multistage refrigeration System of the present invention is particularly adapted for use in Stadium or arena settings, where rapid cooling of mass quantities of canned or bottled beverages for immediate consumption is desired.

Document US 9 109 843 B1, according to its abstract, states a radiator systems utilizing controlling features for shutdown and restart for varying heat load applications.

### SUMMARY

Therefore, a space vehicle according to claim 1 and a method according to claim 9 are provided.

Preferably, the space vehicle comprises a crew compartment and a humidification system. Preferably, the fluid loop further comprises a filter. Preferably, at least a portion of the fluid loop is permeable to water vapor. Preferably, a mixture of the anti-icing fluid and water at a ratio of 85-to-15 (ethanol-to-water) by volume is liquid phase at -84.4 degrees Celsius (-120 degrees Fahrenheit). Preferably, the anti-icing fluid comprises an alcohol. Preferably, the anti-icing fluid comprises ethanol. Preferably, thermal control system comprises the anti-icing fluid at a concentration of at least 800 parts anti-icing fluid per million parts total fluid volume. Preferably, the perfluoropolyether comprises water at a concentration of less than 10 parts water per million parts total fluid volume.

Preferably, the portion of the fluid loop that is permeable to water vapor is exposed to a crew compartment of a space vehicle. Preferably, circulating the heat transfer fluid and the anti-icing fluid within the fluid loop comprises flowing the heat transfer fluid and the anti-icing fluid through a filter. Preferably, the anti-icing fluid comprises ethanol. Preferably, the anti-icing fluid has a concentration of at least 800 parts anti-icing fluid per million parts total fluid volume.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 illustrates an example of a space vehicle.
FIG. 2 illustrates another example of a space vehicle.
FIG. 3 schematically illustrates an example thermal control system for a space vehicle implementing a fluid loop for transferring thermal energy between two components.
FIGS. 4A-4C schematically illustrate the activity of an anti-icing fluid in a portion of an example fluid loop in a thermal control system.
FIG. 5 is a flow diagram of an example method for reducing ice formation in a thermal control system.

### DETAILED DESCRIPTION

Fluid loop heat transfer technology can be implemented in a thermal control system using a variety of different configurations. Generally, a fluid loop is implemented as a closed loop that is capable of recirculating a heat transfer fluid. The heat transfer fluid acts as a medium for transferring thermal energy between components. Depending on the application, additional modules can be included in the thermal control system. For example, in a system implemented to protect a component or sub-system from overheating, the fluid loop can include a radiating component for dissipating transferred heat (through radiation, conduction, and/or convection) from the protected component or sub-system to the environment. Other examples of components can include heaters for providing protection from low temperatures, and filters for protecting components that are sensitive to small dimension objects.

One challenging area for the application of thermal control systems includes thermal regulation in extreme environments. For example, in space applications, systems such as space vehicles, satellites, etc. can be exposed to extreme temperatures on both ends. Such extreme environments can include the extreme coldness found in the shadows of outer space, or the intense heat found in the unfiltered direct solar radiation of outer space. For example, environments in which space systems typically operate can have temperatures ranging from -84.4 degrees Celsius (-120 degrees Fahrenheit) to 121.1 degrees Celsius (250 degrees Fahrenheit).

Environmental factors stemming from these extreme temperatures can cause problems within the fluid loop of a thermal control system. For example, in some applications, at least a portion of the fluid loop is permeable to certain substances, such as water vapor, which can be attributable to other design considerations (e.g., the permeable portion can be due to a material used for a portion of the loop, a connection point between tubing, fittings, etc.). For example, water vapor can enter a water-permeable structure of the fluid loop. As a more specific example, a water-permeable portion of a fluid loop can be exposed to a humidified compartment in a space vehicle. Water vapor from the humidified environment that permeates the fluid loop can freeze in a low temperature environment, resulting in the formation of ice crystals inside the fluid loop. The formation of ice crystals can create problems that reduce the efficiency of the thermal control system and/or the component(s) to be thermally regulated. For example, the performance of a fluid loop implementing a filter for protecting components from small dimension objects can degrade when ice crystal formation within the fluid loop causes blockage of the filter, reducing flow inside the fluid loop.

Given the observations described above, examples are disclosed that relate to mitigating the risk of ice crystal formation within fluid loops for heat transfer by using an anti-icing fluid in the fluid loop along with the heat transfer fluid. The anti-icing fluid can be immiscible with the heat transfer fluid but miscible with water and can have a sufficiently low freezing point when mixed with water to avoid freezing during use in environments with temperatures of -67.8 degrees Celsius (-90 degrees Fahrenheit) or below. In some such examples, the fluid loop can be exposed to temperatures of -84.4 degrees Celsius (-120 degrees Fahrenheit) or below. Given such low temperatures, the anti-icing fluid can comprise, for example, ethanol. The freezing point of ethanol is approximately -114,17 degrees Celsius (-173.5 degrees Fahrenheit), which can be lower than temperatures encountered by a fluid loop of some space vehicles. Thus, the mixture of water and ethanol does not freeze at the temperatures encountered during use of such space vehicles. In some examples, sufficient ethanol can be included in the fluid loop to maintain a concentration of water of less than 5% in the ethanol for the duration of an intended use period. In other examples, sufficient ethanol can be included in the fluid loop to maintain a concentration of water of less than 15% of the ethanol mixture (e.g. 15 ml (milliliters) water per 85ml ethanol) for a duration of an intended use period, such as for the duration of a space mission. In further examples, sufficient ethanol can be included to maintain a concentration of water less than any other suitable fraction of the total fluid volume in the fluid loop. In some examples, the fluid loop can be recharged with fresh heat transfer fluid and ethanol after a use period, thereby providing a new use period for the space vehicle.

In other examples, fluids other than ethanol can be used as anti-icing compounds. Examples can include other alcohols (e.g., methanol, n-propanol, isopropanol), ketones (e.g., acetone), aldehydes (e.g., acetaldehyde), and other water-miscible materials with sufficiently low freezing points such that a mixture with water remains liquid at -67.8 degrees Celsius (-90 degrees Fahrenheit). In further examples, the mixture remains liquid at -84.4 degrees Celsius (-120 degrees Fahrenheit). The type of fluid implemented can depend upon temperatures to which a fluid loop will be exposed during use. As can readily be appreciated, different compounds can be included in different proportions depending on the application and fluid loop implemented.

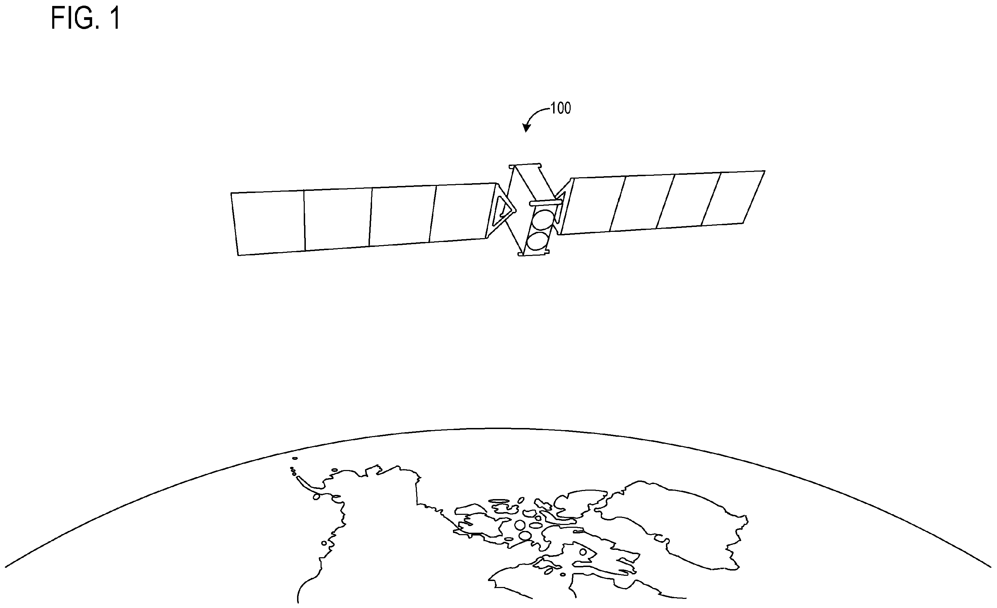

FIG. 1 illustrates an example space vehicle. In this example, the space vehicle takes the form of a satellite 100. Satellites, such as the one depicted in FIG. 1, can include a number of different components and sub-systems implemented for various purposes. Many of these components are temperature-sensitive components, and, as such, the satellite 100 can include a thermal control system for regulating the temperatures of such components. Examples of temperature-sensitive components include antenna arrays, imaging systems (e.g., a radar imaging system, optical imaging system, microwave imaging system, and/or infrared imaging system), sensor systems (e.g., for measuring operational aspects of satellite 100), computer systems (e.g., for controlling operation of satellite 100), etc. Some such components may produce heat that can accumulate and overheat the system unless removed. Other such components may have an optimal operating temperature range that can be maintained through cooling under various conditions. The term "space vehicle" as used herein refers both to actively driven space vehicles and passively moving space vehicles.

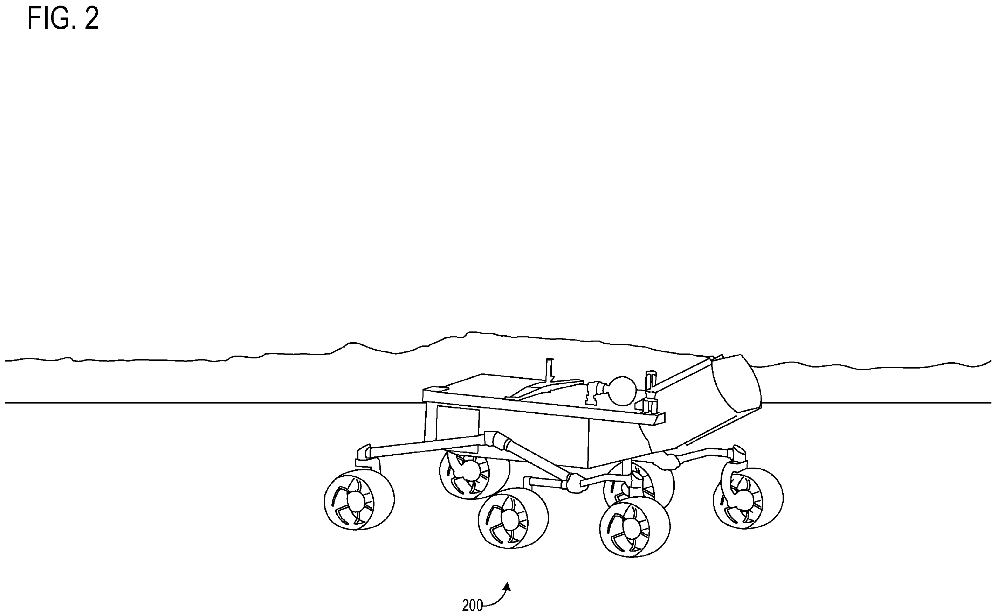

FIG. 2 illustrates another example of a space vehicle 200. The example space vehicle takes the form of a rover 200, which may be used to explore surfaces of extraterrestrial bodies. Rover 200 can include any of a variety of temperature-sensitive components, including but not limited to image sensing and analysis components, chemical sensors and analysis components, radiation detectors and analysis components, mechanical systems, optical and radiofrequency communications systems, and inter-satellite links. The space vehicles of FIGS. 1 and 2 are presented for the purpose of example, and thermal control systems according to the present disclosure can be implemented in any suitable space vehicle to maintain the temperature of heat-sensitive components. Further examples of space vehicles include crewed and uncrewed spaceships, including commercial crew transportation systems.

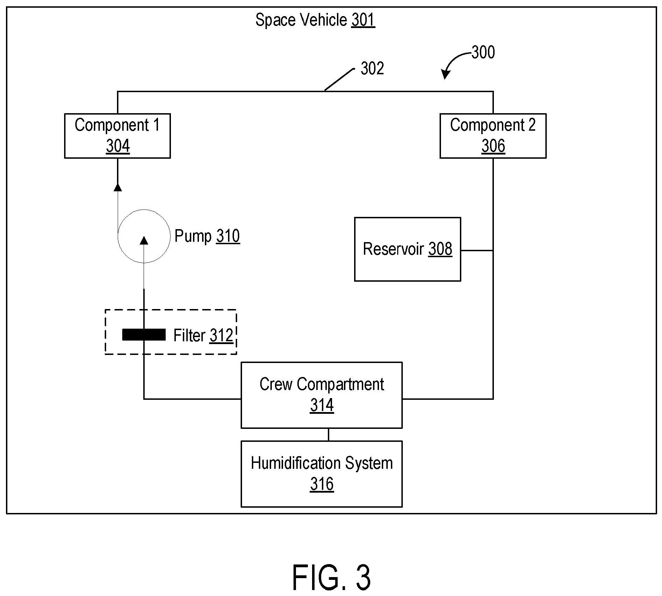

FIG. 3 schematically illustrates an example thermal control system 300 for a space vehicle 301 implementing a fluid loop 302 for transferring thermal energy between two components 304, 306. The thermal control system 300 circulates a heat transfer fluid and an anti-icing fluid in the fluid loop 302, which is thermally connected to the two components 304, 306. During operation, the higher temperature component transfers thermal energy to the heat transfer fluid through processes including but not limited to conduction. The heat transfer fluid circulates, and thermal energy from the heat transfer fluid is transferred to the lower temperature component.

The fluid loop 302 can be implemented using various structures, such as defined channels, tubing, and various couplings. The thermal control system 300 further includes a reservoir 308 for holding a volume of the heat transfer fluid and anti-icing fluid, and a pump 310 for circulating the heat transfer fluid and anti-icing fluid through the fluid loop 302. The pump 310 can comprise any suitable type of pump. Examples include various centrifugal, positive displacement, and axial flow pumps. Although the depicted example illustrates a fluid loop 302 for transferring thermal energy between two components 304, 306, such systems can be expanded to regulate temperatures of more than two components. For example, the fluid loop 302 can be configured to be in thermal communication with two heat-producing components and a heatsink component.

The thermal control system 300 can utilize various types of heat transfer fluids to act as intermediary mediums for the transfer of thermal energy. In some implementations, the heat transfer fluid includes an inert dielectric fluid. In some such examples, the heat transfer fluid includes a perfluoropolyether (PFPE) compound. The heat transfer fluid can be selected for its operating temperature range. For example, in space applications with extreme temperature environments, a wide operating temperature range, such as -84.4 degrees Celsius (-120 degrees Fahrenheit) to 121.1 degrees Celsius (250 degrees Fahrenheit) for example, can be advantageous. In some examples, the heat transfer fluid remains in a liquid state at -70.56 degrees Celsius (-95 degrees Fahrenheit). In some such examples, the heat transfer fluid implemented remains in a liquid state at -84.4 degrees Celsius (-120 degrees Fahrenheit). Similarly, the anti-icing fluid is selected to remain in a liquid phase in such temperature ranges when mixed with water.

In the depicted system 300 of FIG. 3, the fluid loop 302 optionally includes a filter 312, as indicated by dashed lines, for protecting components from small dimension objects. The filter 312 can be configured with a plurality of pores for filtering out objects above a predetermined size.

As explained in more detail below, water can enter the fluid loop 302. For example, the space vehicle 301 can include a crew compartment 314 that is humidified via a humidification system 316. A portion of fluid loop 302 that is exposed to the humidified environment within the crew compartment 314 can be permeable to water. Where the fluid loop 302 is exposed to sufficiently cold temperatures in space, such as below 0 degrees Celsius (32 degrees Fahrenheit) for example, ice crystals can form in the fluid loop 302 and can clog and/or damage the thermal control system 300. For example, in implementations with a filter 312, the ice crystals can cause blockage and clog the filter 312. Clogged filters can reduce flow rates within the fluid loop 302, resulting in reduced performance of the thermal control system 300. When severe enough, the flow rate may be stopped altogether.

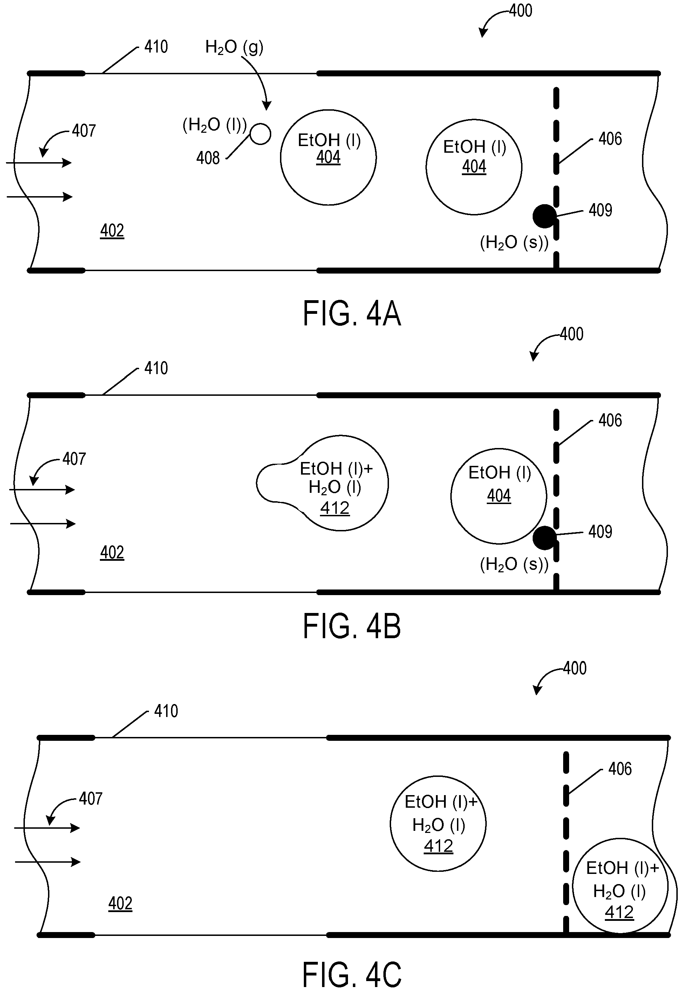

FIGS. 4A-4C schematically illustrates a portion of an example fluid loop 400 in a thermal control system and show how an anti-icing fluid can help to prevent a filter from being clogged by ice in a low temperature use environment. First referring to FIG. 4A, the fluid loop 400 contains a circulating heat transfer fluid 402, such as a PFPE fluid, and a circulating anti-icing fluid 404, illustrated as ethanol (abbreviated EtOH). As shown, the heat transfer fluid includes a relatively high ratio of heat transfer fluid 402 to anti-icing fluid 404 as to maintain the thermal performance of the heat transfer fluid 402. The anti-icing fluid 404 is immiscible with the heat transfer fluid 402. Fluid loop 400 further includes a filter 406, which can be implemented for various purposes, including the protection of components from small dimension objects. Arrows 407 illustrate a direction of fluid flow within the fluid loop 400.

As introduced above, water can be introduced in the fluid loop 400 through various sources, which can be unavoidable in some cases. One source includes the initial filling of the fluid loop 400. For example, in cases where PFPE fluid is utilized, the PFPE fluid can contain water at a concentration of approximately 10-15 parts water per million parts total fluid volume (i.e. water volume plus PFPE volume). This can also be expressed as microliters of water per liter of total fluid volume. A drying process can be performed on the PFPE fluid to reduce the amount of water present before the PFPE fluid is introduced into the fluid loop 400. Such processes can be implemented using various methods, including the use of molecular sieves. The drying process can be performed until a desired level of water concentration in the PFPE fluid is reached. In some implementations, PFPE fluid containing water at a concentration of less than 8 parts water per million parts total fluid volume is introduced into the fluid loop 400. In further implementations, the PFPE fluid contains water at a concentration of less than 5 parts water per million parts total fluid volume.

Another source of water present in the fluid loop 400 includes water vapor (for example, water vapor from a humidifier on a space vehicle, steam to which the fluid loop may be exposed to in some use environments, etc.) that permeated and condensed inside the fluid loop 400. In many applications, including the example system depicted in FIG. 4, the fluid loop 400 can include a portion 410 that is permeable to water vapor (H₂O(g)). Water vapor entering the fluid loop 400 can condense to liquid phase water (H₂O(l)) 408, and under sufficiently cold conditions, such as below 0 degrees Celsius (32 degrees Fahrenheit), can freeze to form ice crystals (H₂O(s)) 409. Ice crystals can result in blockage of the filter 406, resulting in lower flow rates within the fluid loop 400 and reduced performance of the thermal control system. Fluid loop 400 can be exposed to moisture in several different circumstances. For example, while the space vehicle is grounded (the time period from construction to space launch), the fluid loop can be exposed to moisture in the atmosphere. Another scenario includes exposure to moisture present in certain compartments of the space vehicle during operation in space. For example, in a space vehicle containing a crew cabin, the relative humidity in such a compartment can be kept at a predetermined level. In some implementations, the compartment includes a humidifier for keeping the relative humidity of the compartment at a level of at least 45% relative humidity. In further implementations, the predetermined level is at least 55% relative humidity.

In cases where the portion 410 of the fluid loop 400 that is permeable to water vapor is exposed to an environment with moisture (such as those described above), water vapor can permeate into the fluid loop 400 and condense into liquid phase water 408, which is non-soluble in the heat transfer fluid 402. As such, water droplets exist as a separate liquid phase that can freeze into ice crystals when exposed to low enough temperatures. In the extreme environments of space, the fluid loop 400 can be designed to operate in temperatures well below the freezing point of water. In such cases, the formation of ice crystals can substantially clog the filter 406, resulting in reduced performance due to reduced heat transfer fluid flow inside the fluid loop 400.

Thus, the anti-icing fluid 404 helps to prevent the buildup of ice crystals within the fluid loop. The anti-icing fluid 404 is immiscible with the heat transfer fluid 402 and is miscible with water 408 to form a mixture that remains liquid at temperatures under use conditions in space, such as environments with temperatures that can reach - 84.4 degrees Celsius (-120 degrees Fahrenheit) for example. As mentioned above, in some examples, the anti-icing fluid 404 can include an alcohol. Example alcohols can include ethanol, methanol, n-propanol and isopropanol. Other example anti-icing fluids can include ketones (e.g. acetone, methyl ethyl ketone), aldehydes (e.g. acetaldehyde), and other fluids that are miscible with water and have sufficiently low freezing points when mixed with water such that the mixture remains liquid at -67.8 degrees Celsius (-90 degrees Fahrenheit) in some examples. In further examples, the mixture remains liquid at -84.4 degrees Celsius (-120 degrees Fahrenheit). Referring next to FIG. 4B, the anti-icing fluid 404 and water droplets 408 are miscible to form a mixture 412. Referring next to FIG. 4C, the anti-icing fluid 404 can also mix with ice crystals 409, thereby dissolving the ice crystals. In such a process, an outer layer of the ice crystal 409 absorbs anti-icing fluid 404. This causes freezing point depression, melting the ice at the interface and resulting in a liquid interfacial layer. The process continues at the new solid-liquid interface and repeats until the ice crystal 409 is completely melted. In the depicted example, ice crystals 409 that were clogging the pores of the filter 406 are removed by mixing with the anti-icing fluid 404 to form mixture 412.

The fluid loop includes an anti-icing fluid that forms a heterogeneous mixture with the heat transfer fluid. The anti-icing fluid can be included at a predetermined amount depending on the anti-icing fluid utilized and the relevant application. For example, the anti-icing fluid can be included at a concentration that can mix with the anticipated amount of permeated water over the lifetime of the system, or a predetermined length of operation time, such that the resultant mixture has a freezing point below a predetermined temperature, which is determined by the temperature in which the fluid loop is designed to operate. For space applications, the predetermined temperature may be -67.8 degrees Celsius (-90 degrees Fahrenheit), for example. In some implementations, the predetermined temperature is -84.4 degrees Celsius (-120 degrees Fahrenheit).

The anticipated amount of water permeating into the fluid loop of a thermal control system can be estimated for a given time period (such as the lifetime of the system or a predetermined length of operation time). Based on the estimated amount of permeated water over the given time period, the amount of the anti-icing fluid to be included can be calculated accordingly. The amount of the anti-icing fluid can depend on the type of anti-icing fluid utilized and its characteristics when mixed with water. For example, in applications where ethanol is utilized as the anti-icing fluid, the amount of ethanol to be included in the fluid loop can be calculated based on a predetermined ratio of ethanol to the estimated amount of water that will permeate the fluid loop over time. The predetermined ratio also can be based on the freezing point of the resultant mixture and the temperature at which the thermal control system is designed to operate. In some implementations, the ratio of ethanol to estimated amount of permeated water is approximately 85-to-15 (volume of ethanol-to-volume of water), the mixture of which does not freeze at temperatures down to -84.4 degrees Celsius (-120 degrees Fahrenheit). Other predetermined ratios can also be implemented. A ratio of 9-to-1 (volume of ethanol-to-volume of water) can be used, for example. Such ratios can enable the fluid loop to operate at extreme low temperatures (such as -84.4 degrees Celsius (-120 degrees Fahrenheit) or lower) without any appreciable formation of ice crystals inside the fluid loop. Higher relative volumes of anti-icing fluids can be added to accommodate more water absorption while maintaining a desired freezing point. For example, given an estimated water concentration of 25 parts water per million parts total fluid volume, ethanol can be added to the heat transfer fluid such that the resultant heterogeneous mixture contains ethanol at a concentration of at least 800 parts ethanol per million parts total fluid volume. Such excess volumes ensure that the ratio of ethanol to water stays well above a predetermined ratio of 85-to-15 (volume of ethanol-to-volume of water) for the given operational period. The thermal control system can include ethanol (or other anti-icing fluid) at any other suitable concentration. In some implementations, the thermal control system includes ethanol at a concentration of at least 1000 parts ethanol per million parts total fluid volume. In some cases, too high a concentration of anti-icing fluid can undesirably affect the thermal transfer capability of the heat transfer fluid.

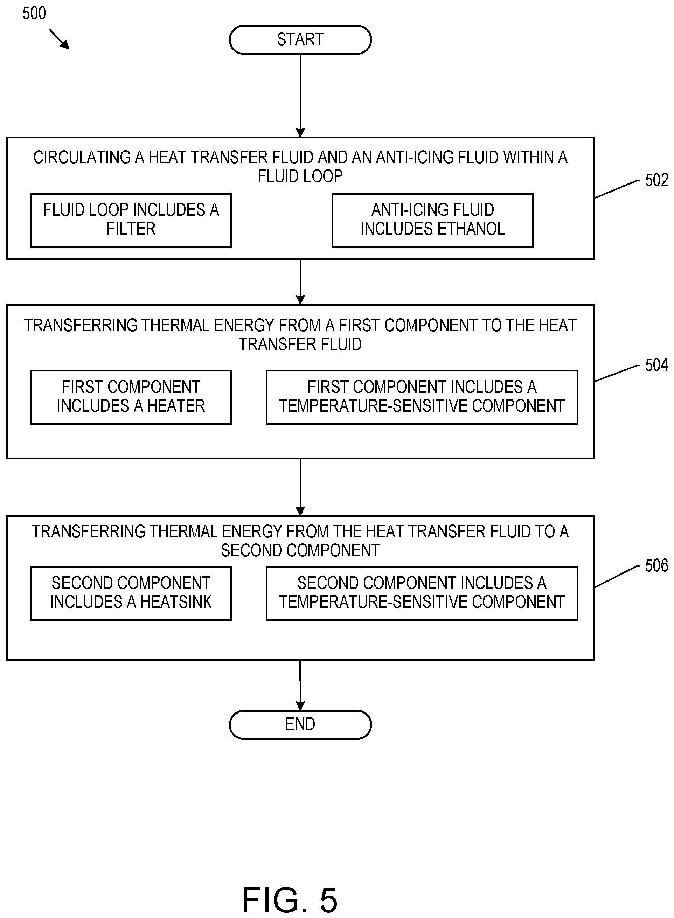

FIG. 5 is a flow diagram of an example method 500 for reducing ice formation in a thermal control system. Some reference numbers provided below are with reference to earlier figures. The method 500 includes, at step 502, circulating a heat transfer fluid (FIG. 4A-4C at 402) and an anti-icing fluid (FIG. 4A-4C at 404) within a fluid loop (FIG. 3 at 302 and FIG. 4A-4C at 400). The heat transfer fluid can be utilized to help regulate the temperatures of two or more components (FIG. 3 at 304 and 306) by acting as an intermediary medium for the transfer of thermal energy between said components. The loop in which the heat transfer fluid and the anti-icing fluid circulate can be implemented with various structures. For example, the loop can include tubing, fittings, channels, etc. In some implementations, the fluid loop includes a filter (FIG. 3 at 312), which can be utilized to protect components from small dimension objects.

Different types of heat transfer fluids can be utilized. In some implementations, the heat transfer fluid includes a PFPE fluid. As PFPE fluids are immiscible with water, the presence of water in the fluid loop can result in the formation of ice crystals in a low temperature environment. An anti-icing fluid can be included to form a heterogenous mixture with the heat transfer fluid. The anti-icing fluid can be implemented for reducing or preventing the formation of ice crystals (within a temperature range). For example, the anti-icing fluid can include a fluid that is immiscible with the heat transfer fluid and is miscible with water to form a mixture that remains liquid at temperatures under use conditions in space. Examples of anti-icing fluids include but are not limited to various alcohols and other water-miscible organic solvents with sufficiently low freezing points when mixed with water. As mentioned above, in more specific examples, the thermal control system can include ethanol at a concentration of at least 800 parts ethanol per million parts total fluid volume. In further examples, the thermal control system includes ethanol at a concentration of at least 1000 parts ethanol per million parts total fluid volume. Such concentrations can prevent the formation of ice crystals at low temperatures associated with space applications. For example, an ethanol-water mixture at a ratio of 85-to-15 (ethanol-to-water) by volume can have a freezing point below -84.4 degrees Celsius (-120 degrees Fahrenheit). By estimating the amount of water that will be introduced into the fluid loop over the operational period of the thermal control system, a corresponding amount of ethanol can be determined and added to the fluid loop to anticipate future additions of water. For example, given an estimated water concentration of 25 parts water per million parts total fluid volume, the amount of ethanol added can be calculated based on an 85-to-15 ratio (ethanol-to-water) by volume to maintain liquid phase at -84.4 degrees Celsius (-120 degrees Fahrenheit). Higher volumes of anti-icing fluids can be added to provide a larger buffer in preventing the formation of ice crystals. For example, ethanol can be added at a concentration of 1000 parts ethanol per million parts total fluid volume, given an estimated water concentration of 25 parts water per million parts total fluid volume. Such methodologies enable the thermal control system to maintain an appropriate ratio of ethanol to water throughout the operational period, keeping the freezing point of any mixture formed below the temperature of the environment in which such systems are intended to operate. As can readily be appreciated, other anti-icing fluids such as methanol, n-propanol, isopropanol, etc. can be implemented in a similar manner.

At step 504, the method 500 includes transferring thermal energy from a first component to the heat transfer fluid. The heat transfer fluid and the fluid loop are in thermal communication with the first component. At step 506, the method 500 includes transferring thermal energy from the heat transfer fluid to a second component. The heat transfer fluid and the fluid loop are in thermal communication with the second component.

The structure and function of the first and second components can depend on the application. For example, in a system for cooling components, the first component can include a heat-producing component. If left unchecked, especially in the vacuum of space, the heat produced can build up until the temperature of the component is above its operating range. To regulate its temperature, thermal energy from the heat-producing component is transferred to the heat transfer fluid, which is then transferred to the second component. In such a system, the second component can include a heat dissipating element. For example, the second component can be a heatsink configured to radiate captured heat out to the environment.

On the other hand, in a system for warming components, the first component can include a heating element. Various types of heaters can be implemented. In some implementations, the heater is an electric heater. Generated heat from the first component is transferred to the heat transfer fluid, which is used to warm up the second component. The second component can include a temperature-sensitive component such as sensors and imaging systems.

Thermal control systems described in the present disclosure include various fluid loop configurations for application in extreme temperature environments. To combat ice crystal formation inside a fluid loop in a low temperature environment, an anti-icing fluid can be added to the heat transfer fluid utilize in such loops. The type of anti-icing fluid and the concentration in which to add it can vary depending on the application. For example, in a space application where the temperature of the environment can reach -84.4 degrees Celsius (-120 degrees Fahrenheit), ethanol can be added to the heat transfer fluid at a concentration of at least 1000 parts ethanol per million parts total fluid volume. Such implementations allow water in the heat transfer fluid to mix with the ethanol to form a mixture having a freezing point below -84.4 degrees Celsius (-120 degrees Fahrenheit).

While disclosed in the context of space vehicles, a fluid loop comprising a heat transfer fluid and anti-icing fluid as disclosed can be used in any other suitable vehicles. Examples, which are not covered by the appended claims, include land vehicles (cars, trucks, trains, military vehicles, etc.), aircraft (airplanes, helicopters, inflatable vehicles such as blips and balloons), and water vehicles (e.g., boat and submarines).

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies.

## Claims

1. A space vehicle (301), comprising:
a first component (304);
a second component (306); and
a thermal control system (300) for transferring thermal energy between the first component (304) and the second component (306), the thermal control system (300) comprising:
a fluid loop (302) in thermal communication with the first component (304) and the second component (306), wherein at least a portion (410) of the fluid loop (302) is permeable to water vapor;
a heat transfer fluid (402) comprising a perfluoropolyether compound;
an anti-icing fluid (404), wherein the anti-icing fluid (404) is immiscible with the heat transfer fluid (402) and is miscible with water (408) to form a mixture (412) that remains liquid at temperatures under use conditions in space; and
a pump (310) for circulating the heat transfer fluid (402) and the anti-icing fluid (404) within the fluid loop (302), wherein the anti-icing fluid is forming a heterogeneous mixture (412) with the heat transfer fluid.

2. The space vehicle (301) of claim 1, wherein the space vehicle comprises a crew compartment and a humidification system.

3. The space vehicle (301) of claim 1 or 2, wherein the fluid loop (302) further comprises a filter (312).

4. The space vehicle (301) of any of claims 1 to 3, wherein the mixture (412) of the anti-icing fluid (404) and water (408) at a ratio of 85-to-15 (anti-icing fluid-to-water) by volume is liquid phase at -120 degrees Fahrenheit.

5. The space vehicle (301) of any of claims 1 to 4, wherein the anti-icing fluid (404) comprises an alcohol.

6. The space vehicle of claim 5, wherein the anti-icing fluid comprises ethanol.

7. The space vehicle (301) of claim 6, wherein thermal control system (300) comprises the anti-icing fluid (404) at a concentration of at least 800 parts anti-icing fluid (404) per million parts total fluid volume.

8. The space vehicle (301) of any of claims 1 to 6, wherein the perfluoropolyether comprises water at a concentration of less than 10 parts water per million parts total fluid volume.

9. A method (500) for reducing ice formation in a thermal control system (300) of a space vehicle (301), the method (500) comprising:
circulating (502) a heat transfer fluid (402) and an anti-icing fluid (404) within a fluid loop (302) that is in thermal communication with a first component (304) and a second component (306), wherein:
at least a portion (410) of the fluid loop (302) is permeable to water vapor;
the heat transfer fluid (402) comprises a perfluoropolyether compound; and
the anti-icing fluid (404) is immiscible with the heat transfer fluid (402) and is miscible with water (408) to form a mixture (412) that remains liquid at temperatures under use conditions in space;
transferring (504) thermal energy from the first component (304) to the heat transfer fluid (402); and
transferring (506) thermal energy from the heat transfer fluid (402) to the second component (306).

10. The method (500) of claim 9, wherein: the portion (410) of the fluid loop (302) that is permeable to water vapor is exposed to a crew compartment (314) of the space vehicle (301).

11. The method (500) of claim 9 or 10, wherein circulating the heat transfer fluid (402) and the anti-icing fluid (404) within the fluid loop (302) comprises flowing the heat transfer fluid (402) and the anti-icing fluid (404) through a filter (312).

12. The method (500) of any of claims 9 to 11, wherein the anti-icing fluid (404) comprises ethanol.

13. The method (500) of any of claims 9 to 12, wherein the anti-icing fluid (404) has a concentration of at least 800 parts anti-icing fluid (404) per million parts total fluid volume.

## Patentansprüche

1. Raumfahrzeug (301), aufweisend:
eine erste Komponente (304);
eine zweite Komponente (306); und
ein Wärmeregelungssystem (300) zum Übertragen von Wärmeenergie zwischen der ersten Komponente (304) und der zweiten Komponente (306), wobei das Wärmeregelungssystem (300) aufweist:
einen Fluidkreislauf (302), der mit der ersten Komponente (304) und der zweiten Komponente (306) in thermischer Verbindung steht, wobei zumindest ein Abschnitt (410) des Fluidkreislaufs (302) für Wasserdampf durchlässig ist;
ein Wärmeübertragungsfluid (402), das eine Perfluorpolyetherverbindung aufweist;
ein Antivereisungsfluid (404), wobei das Antivereisungsfluid (404) mit dem Wärmeübertragungsfluid (402) nicht mischbar und mit Wasser (408) mischbar ist, um ein Gemisch (412) zu bilden, das bei Temperaturen unter Einsatzbedingungen im Weltraum flüssig bleibt; und
eine Pumpe (310) zum Zirkulieren des Wärmeübertragungsfluids (402) und des Antivereisungsfluids (404) innerhalb des Fluidkreislaufs (302), wobei das Antivereisungsfluid mit dem Wärmeübertragungsfluid ein heterogenes Gemisch (412) bildet.

2. Raumfahrzeug (301) nach Anspruch 1, wobei das Raumfahrzeug ein Besatzungsabteil und ein Befeuchtungssystem aufweist.

3. Raumfahrzeug (301) nach Anspruch 1 oder 2, wobei der Fluidkreislauf (302) ferner einen Filter (312) aufweist.

4. Raumfahrzeug (301) nach einem der Ansprüche 1 bis 3, wobei das Gemisch (412) aus dem Antivereisungsfluid (404) und Wasser (408) bei einem Volumenverhältnis von 85 zu 15 (Antivereisungsfluid zu Wasser) bei -120 Grad Fahrenheit in flüssiger Phase vorliegt.

5. Raumfahrzeug (301) nach einem der Ansprüche 1 bis 4, wobei das Antivereisungsfluid (404) einen Alkohol aufweist.

6. Raumfahrzeug nach Anspruch 5, wobei das Antivereisungsfluid Ethanol aufweist.

7. Raumfahrzeug (301) nach Anspruch 6, wobei das Wärmeregelungssystem (300) das Antivereisungsfluid (404) in einer Konzentration von mindestens 800 Teilen Antivereisungsfluid (404) pro einer Million Teile des gesamten Fluidvolumens aufweist.

8. Raumfahrzeug (301) nach einem der Ansprüche 1 bis 6, wobei der Perfluorpolyether Wasser in einer Konzentration von weniger als 10 Teilen Wasser pro einer Million Teile des gesamten Fluidvolumens aufweist.

9. Verfahren (500) zum Reduzieren einer Eisbildung in einem Wärmeregelungssystem (300) eines Raumfahrzeugs (301), wobei das Verfahren (500) aufweist:
Zirkulieren (502) eines Wärmeübertragungsfluids (402) und eines Antivereisungsfluids (404) innerhalb eines Fluidkreislaufs (302), der mit einer ersten Komponente (304) und einer zweiten Komponente (306) in thermischer Verbindung steht, wobei:
zumindest ein Abschnitt (410) des Fluidkreislaufs (302) für Wasserdampf durchlässig ist;
das Wärmeübertragungsfluid (402) eine Perfluorpolyetherverbindung aufweist; und
das Antivereisungsfluid (404) mit dem Wärmeübertragungsfluid (402) nicht mischbar und mit Wasser (408) mischbar ist, um ein Gemisch (412) zu bilden, das bei Temperaturen unter Einsatzbedingungen im Weltraum flüssig bleibt;
Übertragen (504) von Wärmeenergie von der ersten Komponente (304) auf das Wärmeübertragungsfluid (402); und
Übertragen (506) von Wärmeenergie von dem Wärmeübertragungsfluid (402) auf die zweite Komponente (306).

10. Verfahren (500) nach Anspruch 9, wobei:
der Abschnitt (410) des Fluidkreislaufs (302), der für Wasserdampf durchlässig ist, einem Besatzungsabteil (314) des Raumfahrzeugs (301) ausgesetzt ist.

11. Verfahren (500) nach Anspruch 9 oder 10, wobei das Zirkulieren des Wärmeübertragungsfluids (402) und des Antivereisungsfluids (404) innerhalb des Fluidkreislaufs (302) ein Strömenlassen des Wärmeübertragungsfluids (402) und des Antivereisungsfluids (404) durch einen Filter (312) aufweist.

12. Verfahren (500) nach einem der Ansprüche 9 bis 11, wobei das Antivereisungsfluid (404) Ethanol aufweist.

13. Verfahren (500) nach einem der Ansprüche 9 bis 12, wobei das Antivereisungsfluid (404) eine Konzentration von mindestens 800 Teilen Antivereisungsfluid (404) pro einer Million Teile des gesamten Fluidvolumens aufweist.

## Revendications

1. Véhicule spatial (301) comprenant :
un premier composant (304) ;
un second composant (306) ; et
un système de commande thermique (300) pour transférer de l'énergie thermique entre le premier composant (304) et le second composant (306), le système de commande thermique (300) comprenant :
une boucle de fluide (302) en communication thermique avec le premier composant (304) et le second composant (306), dans lequel au moins une partie (410) de la boucle de fluide (302) est perméable à la vapeur d'eau ;
un fluide caloporteur (402) comprenant un composé perfluoropolyéther ;
un fluide antigivre (404), dans lequel le fluide antigivre (404) est immiscible avec le fluide caloporteur (402) et est miscible avec l'eau (408) pour former un mélange (412) qui reste liquide aux températures dans des conditions d'utilisation dans l'espace ; et
une pompe (310) pour faire circuler le fluide caloporteur (402) et le fluide antigivre (404) dans la boucle de fluide (302), dans lequel le fluide antigivre forme un mélange hétérogène (412) avec le fluide caloporteur.

2. Véhicule spatial (301) selon la revendication 1, dans lequel le véhicule spatial comprend un compartiment d'équipage et un système d'humidification.

3. Véhicule spatial (301) selon la revendication 1 ou 2, dans lequel la boucle de fluide (302) comprend en outre un filtre (312).

4. Véhicule spatial (301) selon l'une quelconque des revendications 1 à 3, dans lequel le mélange (412) du fluide antigivre (404) et d'eau (408) à un rapport de 85/15 (fluide antigivre/eau) en volume est en phase liquide à -120 degrés Fahrenheit.

5. Véhicule spatial (301) selon l'une quelconque des revendications 1 à 4, dans lequel le fluide antigivre (404) comprend un alcool.

6. Véhicule spatial selon la revendication 5, dans lequel le fluide antigivre comprend de l'éthanol.

7. Véhicule spatial (301) selon la revendication 6, dans lequel le système de commande thermique (300) comprend le fluide antigivre (404) à une concentration d'au moins 800 parties de fluide antigivre (404) par million de parties de volume de fluide total.

8. Véhicule spatial (301) selon l'une quelconque des revendications 1 à 6, dans lequel le perfluoropolyéther comprend de l'eau à une concentration inférieure à 10 parties d'eau par million de parties de volume total de fluide.

9. Procédé (500) permettant de réduire la formation de glace dans un système de commande thermique (300) d'un véhicule spatial (301), le procédé (500) comprenant :
la circulation (502) d'un fluide caloporteur (402) et d'un fluide antigivre (404) dans une boucle de fluide (302) qui est en communication thermique avec un premier composant (304) et un second composant (306), dans lequel :
au moins une portion (410) de la boucle de fluide (302) est perméable à la vapeur d'eau ;
le fluide caloporteur (402) comprend un composé perfluoropolyéther ;
et
le fluide antigivre (404) est immiscible avec le fluide caloporteur (402) et est miscible avec l'eau (408) pour former un mélange (412) qui reste liquide aux températures dans les conditions d'utilisation dans l'espace ;
le transfert (504) de l'énergie thermique du premier composant (304) au fluide caloporteur (402) ; et
le transfert (506) de l'énergie thermique du fluide caloporteur (402) au second composant (306).

10. Procédé (500) selon la revendication 9, dans lequel :
la portion (410) de la boucle de fluide (302) qui est perméable à la vapeur d'eau est exposée à un compartiment d'équipage (314) du véhicule spatial (301).

11. Procédé (500) selon la revendication 9 ou 10, dans lequel la circulation du fluide caloporteur (402) et du fluide antigivre (404) dans la boucle de fluide (3 02) comprend l'écoulement du fluide caloporteur (402) et du fluide antigivre (404) à travers un filtre (312).

12. Procédé (500) selon l'une quelconque des revendications 9 à 11, dans lequel le fluide antigivre (404) comprend de l'éthanol.

13. Procédé (500) selon l'une quelconque des revendications 9 à 12, dans lequel le fluide antigivre (404) a une concentration d'au moins 800 parties de fluide antigivre (404) par million de parties du volume total de fluide.
